# EUROPEAN PATENT SPECIFICATION

(11) **EP 3 682 644 B1**
(45) Date of publication and mention of the grant of the patent: **28.10.2026**
(21) Application number: 18782578.1
(22) Date of filing: 10.09.2018
(51) Int. Cl.: H04N 21/44, H04N 21/442, H04N 21/81, G06V 20/40

(54) **COLD MATCHING BY AUTOMATIC CONTENT RECOGNITION**
KALTANPASSUNG DURCH AUTOMATISCHE INHALTSERKENNUNG
MISE EN CORRESPONDANCE À FROID PAR RECONNAISSANCE DE CONTENU AUTOMATIQUE

(30) Priority: 13.09.2017 US 201715703684
(43) Date of publication of application: 22.07.2020
(73) Proprietor: Roku, Inc., San Jose, CA 95110 (US)
(72) Inventor: CHEN, Juikun, West Jordan, UT 84084 (US)
(74) Representative: Taor, Simon Edward William
(86) International application number: PCT/US2018/050230
(87) International publication number: WO 2019/055344

(56) References cited:
- EP-A1- 2 437 498
- WO-A1-2016/200622
- US-A1- 2004 237 102
- US-A1- 2010 318 515
- US-A1- 2016 286 285
- MANI MALEK ESMAEILI ET AL: "A Robust and Fast Video Copy Detection System Using Content-Based Fingerprinting", IEEE TRANSACTIONS ON INFORMATION FORENSICS AND SECURITY, vol. 6, no. 1, 1 March 2011 (2011-03-01), USA, pages 213 - 226, XP055307721, ISSN: 1556-6013, DOI: 10.1109/TIFS.2010.2097593

## Description

### TECHNICAL FIELD

This disclosure relates to automatic content recognition and more particularly to cold matching by automatic content recognition.

### BACKGROUND

Media devices today are becoming more and more common and may range from fixtures in a home, such as a television, to mobile devices traveling along with a media consumer. Media devices, such as televisions, set-top-boxes, mobile phones, laptops, and tablets, may access and may retrieve media content from a variety of sources. For example, a media device may receive media content via satellite, over-the-air broadcasting, or streaming systems from a wired or a wireless connection. As the use of media devices continues to increase, media device connectivity to media content has also increased. With this growth, new media content markets have emerged and old media content market have adapted to understand and to provide contextually-relevant media content to the media consumer.

US2004237102A1 discloses an ad reselling system that sells targeted advertisements, which replaces standard advertisements in a video signal. The standard advertisements are detected and replaced with the targeted advertisements. Sponsors of the targeted advertisements are billed when their advertisements are used to replace other advertisements.

US2016286285A1 discloses a system including a processor to retrieve, from a memory, data of a video frame, the data including measurements of luminance, each of the measurements of luminance being associated with a different entry in a matrix, calculate a weighted average luminance value Ly for the measurements of luminance weighted according to a row position of the one measurement of luminance in the matrix, calculate a weighted average luminance value Lx for the measurements of luminance weighted according to a column position of the one measurement of luminance in the matrix, and create a video signature, S0, of the video frame, the video signature, S0, including the weighted average luminance value Ly and the weighted average luminance value Lx.

### SUMMARY

According to an aspect, there is provided a method set out in claim 1. Optional features are set out in claims 2 to 6.

According to an aspect, there is provided a system as set out in claim 7. Optional features are set out in claims 8 to 12.

According to an aspect, there is provided a non-transitory memory as set out in claim 13.

The details of one or more implementations of the disclosure are set forth in the accompanying drawings and the description below. Other aspects, features, and advantages will be apparent from the description and drawings, and from the claims.

### DESCRIPTION OF DRAWINGS

FIGS. 1A and 1B are schematic views of an example automatic content recognition environment.
FIG. 2 is a schematic view of an example server of the automatic content recognition environment.
FIGS. 3A-3C are perspective views of example matchers corresponding to a media device.
FIG. 4 is a flow diagram for an example arrangement of operations executable by an automatic content recognition routine.
FIG. 5 is a schematic view of an example computing device that may be used to implement the systems and methods described herein.

Like reference symbols in the various drawings indicate like elements.

### DETAILED DESCRIPTION

Generally, automatic content recognition (ACR) is the automatic process of identifying media content on a media device or within a media file. ACR has become increasingly useful to identify vast amounts of media content consumed by society every day. From a commercial perspective, ACR may allow businesses and other entities to understand media content consumption and, perhaps more effectively, to market or to target consumers (i.e. media device users) of the media content. For example, an advertisement or an offer is likely more effective when the advertisement is personalized to the user of a media device. Accordingly, broadcasters, commercial providers, advertisers and other content entities want to know what programs are being viewed or, more particularly, where the user is in the program during viewing. With this type of information, the media device user may receive more precisely catered media content.

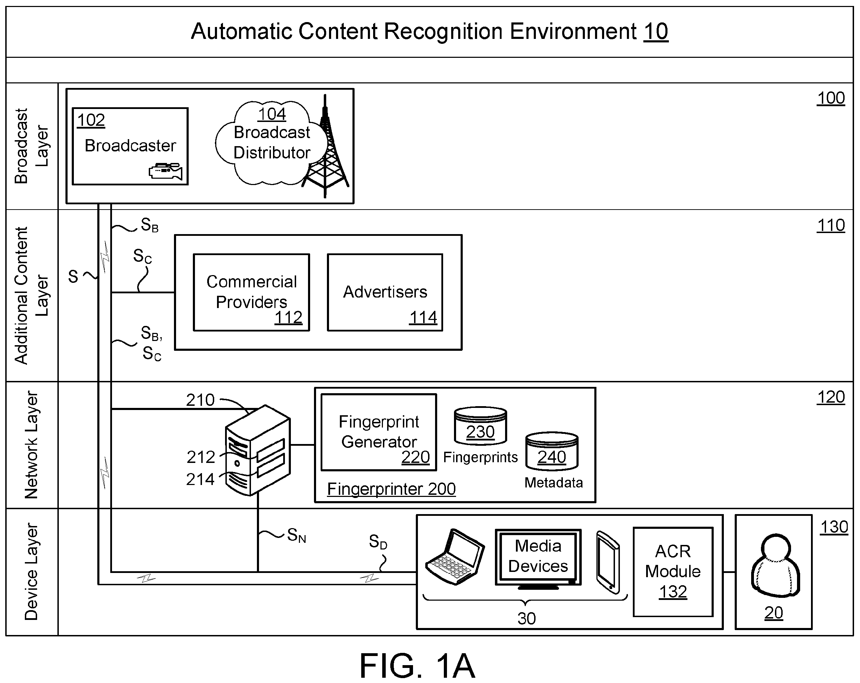

FIG. 1A is an example of an ACR environment 10. The ACR environment 10 may include several layers to distribute media content to a user 20 (i.e., a viewer) of a media device 30. FIG. 1A attempts to simplify the media content distribution process into four layers: a broadcast layer 100; an additional content layer 110; a network layer 120; and a device layer 130. Each layer 100, 110, 120, 130 may have entities that influence a media stream S. The broadcast layer 100 represents broadcast entities that may be involved to produce a broadcast media stream S_{B}. These broadcast entities may include a broadcaster 102 and a broadcast distributor 104. The broadcaster 102 may be one or more media content providers such as local broadcasters, multi-channel networks, or other media content owners. The broadcast distributor 104 is a broadcast entity that provides infrastructure or resources (e.g., signal wires, communication towers, communication antennas, servers, etc.) to distribute media content. The broadcaster 102 and the broadcast distributor 104 may be the same broadcast entity or a different broadcast entity depending on broadcasting variables, such as a type of media content being provided or a type of media device receiving the media content.

In some implementations, the broadcast media stream S_{B} includes additional media content Sc from content entities represented as the additional content layer 110. These content entities include commercial providers 112, advertisers 114, or other entities contributing additional media content Sc to the broadcast media stream S_{B}. Generally, commercial providers 112 are content entities that procure and/or host additional media content Sc, while advertisers 114 are content entities that generate the additional media content Sc with content, such as advertisements, offers, deals, discounts, benefits, or other promotions of goods and/or services. Additionally or alternatively, the commercial providers 112 and the advertisers 114 may be the same content entity. The additional content layer 110 may communicate the additional media content Sc to the broadcast layer 100, the network layer 120, the device layer 130, or any combination thereof. Optionally, the additional content layer 110 may pair the additional media content Sc with the broadcast media stream S_{B} to form a combined broadcast media stream S_{B}, Sc that includes the additional media content Sc.

Referring further to FIG. 1A, the network layer 120 is configured to receive the broadcast media stream S_{B} and the additional media content Sc from the broadcast layer 100 and/or the additional content layer 110. For example, if the network layer 120 receives the media stream S from the broadcast layer 100, the network layer 120 may receive the broadcast media stream S_{B} with the additional media content Sc or independent of the additional media content Sc. Similarly, if the network layer 120 receives the media stream S from the additional content layer 110, the network layer 120 may receive the broadcast media stream S_{B} with the additional media content Sc or independent of the additional media content Sc. In some implementations, the network layer 120 may pair the broadcast media stream S_{B} from the broadcast layer 100 with the additional media content Sc from the additional content layer 110 to generate a network media stream S_{N} representing the broadcast media stream S_{B} impregnated with the additional media content Sc.

The network layer 120 includes a fingerprinter 200. The fingerprinter 200 is configured to operate on a server 210 having data processing hardware 212 and memory hardware 214. The fingerprinter 200 includes a broadcast fingerprint generator 220. The network layer 120 may be configured to store fingerprints 222 and metadata 224 related to the fingerprints 222 in a fingerprint database 230 and/or a metadata database 240. Generally, a fingerprint 222 is at least one unique identifier corresponding to at least one frame Fₙ of the media stream S. For example, the at least one unique identifier may be a value (e.g., pixel value), an alphanumeric representation, or a compressed version of the audio visual image. Additionally or alternatively, the network layer 120 is configured to store the broadcast media stream S_{B}, the additional media content Sc, or both.

FIG. 1A also illustrates that any layer (i.e., the broadcast layer 100, the additional content layer 110, or the network layer 120) may communicate with the device layer 130. At the device layer 130, media devices 30, such as televisions, PCs, laptops, tablets, or mobile phones, receive a media device stream S_{D} (e.g., any combination of the broadcast media stream S_{B}, the additional content stream Sc, or the network media stream S_{N}) and may convey all or a portion of the corresponding media device stream S_{D} (e.g., any combination of the broadcast media stream S_{B}, the additional content stream Sc, or the network media stream S_{N}) to a user 20. A device may mean any hardware or any software related to a media device 30 configured to receive or to communicate some form of media content. Moreover, the device may include data processing hardware and/or memory hardware. In some implementations, the media devices 30 may be configured to interpret or to interact with the corresponding media stream (e.g., any combination of the broadcast media stream S_{B}, the additional content stream Sc, or the network media stream S_{N}). For example, the media devices 30 identify the additional media content Sc from the broadcast media stream S_{B}. The media devices 30 may replace or overlay the additional media content Sc of the broadcast media stream S_{B} with replacement media content. The media devices 30 may filter the broadcast media stream S_{B}, Sc for predefined content. Additionally or alternatively, the media devices 30 may be configured to communicate information or data related to the media stream (e.g., any combination of the broadcast media stream S_{B}, the additional content stream Sc, or the network media stream S_{N}) with the broadcast layer 100, the additional content layer 110, the network layer 120, or other media devices 30 of the device layer 130. The media device 30 may execute an ACR module 132 or be in communication with other data processing hardware executing the ACR module 132. The ACR module 132 may be configured to identify a content element (e.g., audio, video or digital image) within a media stream based on sampling a portion of the media stream, processing the sample, and comparing the sample with a source service that identifies content by unique characteristics, such as audio or video fingerprints or watermarks.

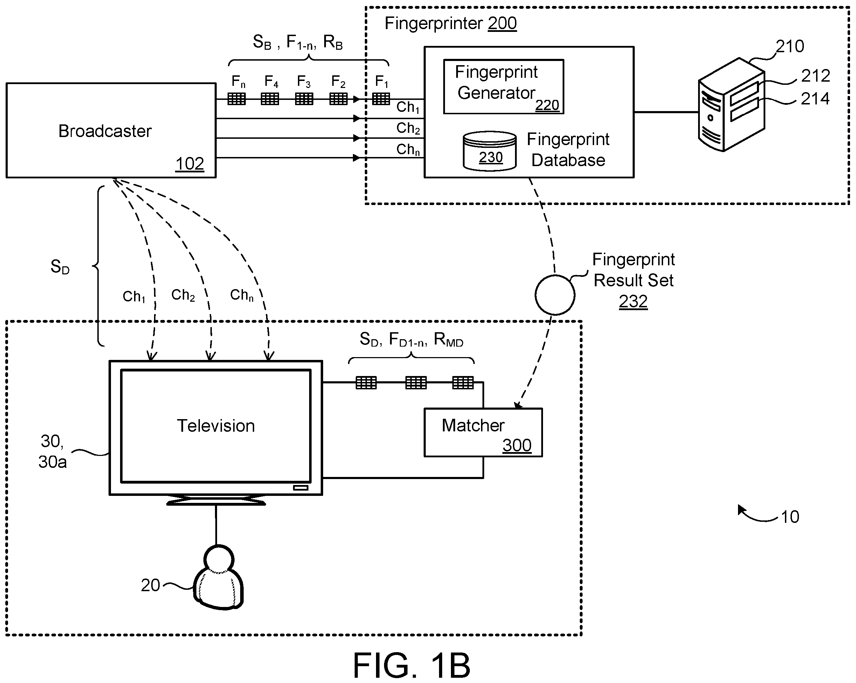

FIG. 1B is an example of an ACR environment 10. The ACR environment 10 includes a broadcaster 102, a fingerprinter 200, and a matcher 300 (which may be part of the ACR module 132). The broadcaster 102 broadcasts the broadcast media stream S_{B}, Sc by channels Ch₁₋ₙ to the fingerprinter 200 at a broadcast frame rate R_{B}. The broadcast frame rate R_{B} divides the broadcast media stream S_{B}, Sc into broadcast frames F₁₋ₙ such that each broadcast frame F₁₋ₙ corresponds to an audio visual image represented by pixels within the broadcast media stream S_{B}. The fingerprinter 200 is configured to receive each broadcast frame F₁₋ₙ at the broadcast fingerprint generator 220. The broadcast fingerprint generator 220 receives each broadcast frame F₁₋ₙ and is configured to generate broadcast fingerprints 222, 222a indicative of each broadcast frame F₁₋ₙ. Generally, a broadcast fingerprint 222, 222a is at least one unique identifier corresponding to at least one broadcast frame F₁₋ₙ. The fingerprinter 200 may store each broadcast fingerprint 222, 222a in a database, such as the fingerprint database 230. In some examples, the fingerprinter 200 stores each broadcast fingerprint 222, 222a according to or along with metadata 224 corresponding to the broadcast frame F₁₋ₙ, such as a frame location (e.g., a frame time code), a type of frame (e.g., live program or advertisement), or a fingerprint identifier tag. In other examples, the fingerprinter 200 has a separate database or databases corresponding to the metadata 224 of each broadcast fingerprints 222, 222a. A separate database for metadata 224 may allow the fingerprinter 200 to store more broadcast fingerprints 222, 222a.

Referring further to FIG. 1B, the broadcaster 102 also broadcasts the broadcast media stream S_{B}, Sc to the media device 30. The media device 30 receives the broadcast media stream S_{B}, Sc from the broadcaster 102 as a media device stream S_{D}. The media device 30 is configured to capture media frames F_{D1-n} from the media device stream S_{B} and to communicate the captured media frames F_{D1-n} to the matcher 300. In the example shown in FIG. 1B, the media device 30 is a television 30, 30a (TV) that receives the media device stream S_{D}. For example, the television 30, 30a receives television channels Ch₁₋ₙ as the media device stream S_{D}. Other types of media devices 30 are possible as well.

In some implementations, the broadcaster 102 provides the broadcast media stream S_{B}, Sc at the broadcast frame rate R_{B}. The media device 30 (e.g., depicted as the TV 30, 30a) may receive the broadcast media stream S_{B}, Sc at the corresponding broadcast frame rate R_{B} as the media device stream S_{D}. Often, the broadcast frame rate R_{B} corresponds to various industry standards of a broadcast format (e.g., 1080 60i, 720 60P, etc.). For example, some common broadcast frame rates R_{B} include 30P (29.97 frames per second), 24P, (23.98 frames per second), and 60P (59.94 frames per second). The media device 30 may be configured to capture frames F_{D1-n} of the media device stream S_{D} at a media device frame rate R_{MD}. The media device frame rate R_{MD} is the frame rate that a corresponding media device 30 provides captured frames F_{D1-n} to the matcher 300. In some implementations, the media device 30 is configured to receive the media device stream S_{D} at the broadcast frame rate R_{B}, but yet is configured to capture frames F_{D1-n} of the media device stream S_{D} at a media device frame rate R_{MD} for the matcher 300. For example, the broadcast frame rate R_{B} is different than the media device frame rate R_{MD}. An example of this difference is that the broadcast frame rate R_{B} is greater than the media device frame rate R_{MD} (e.g., a broadcast frame rate of 30P and a media device frame rate R_{MD} of 4 frames per second). The difference in frame rates may be due to resource limitations (CPU, memory, etc.) relating to frame capturing hardware or software at the media device 30.

In some examples, the matcher 300 receives a fingerprint result set 232 and the media device frames F_{D1-n} from the media device stream S_{D}. The fingerprint result set 232 corresponds to a sequence of broadcast fingerprints 222, 222a captured at the fingerprinter 200 and communicated to the matcher 300. An advantage of the fingerprint result set 232 is that the fingerprinter 200 and matcher 300 may communicate portions of all broadcast fingerprints 222, 222a generated by the fingerprinter 200 instead of all broadcast fingerprints 222, 222a. As a portion of the broadcast fingerprints 222, 222a of the fingerprint database 230, the fingerprint results set 232 may be a data size that permits the matcher 300 to more efficiently process. The matcher 300 may compare the media device frames F_{D1-n} to the broadcast frames F₁₋ₙ to identify matching frames Fₙ, F_{Dn}. The matcher 300 may be an internal device to the television 30, 30a (e.g., hardware or software of the television 30, 30a) or an external device in communication with the television 30, 30a (e.g., a headend system or a set top box). In some implementations, the fingerprint result set 232 corresponds to a set amount of sequential broadcast fingerprints 222, 222a. For example, the fingerprint result set 232 includes sequential broadcast fingerprints 222, 222a corresponding to five minutes of broadcast frames F₁₋ₙ. In other words, at a broadcast frame rate R_{B} of thirty frames per second, the fingerprint result set 232 includes 9,000 sequential broadcast fingerprints 222, 222a corresponding to 9,000 sequential broadcast frames F₁₋₉₀₀₀ during a five minute span.

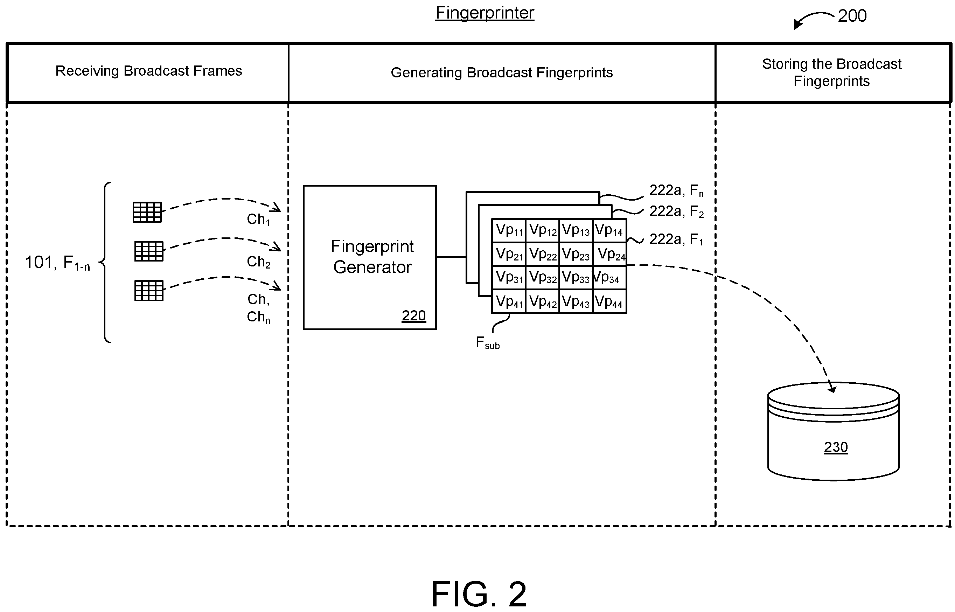

FIG. 2 is an example of the broadcast fingerprint generator 220 of the fingerprinter 200. The broadcast fingerprint generator 220 receives the broadcast frames F₁₋ₙ corresponding to channels Ch₁₋ₙ of the broadcast media stream S_{B}, Sc. The broadcast fingerprint generator 220 may generate a broadcast fingerprint 222, 222a for each received broadcast frame F₁₋ₙ and may store the broadcast fingerprint 222, 222a in the fingerprint database 230. In some examples, each broadcast fingerprint 222, 222a represents at least one pixel value V_{P} of the broadcast frame F₁₋ₙ of the corresponding broadcast media stream S_{B}. The at least one pixel value V_{P} may be an average pixel value or a sum of color space values of the broadcast frame F₁₋ₙ. For example, the at least one pixel value V_{P} may represent a sum and/or average of grayscale values of a corresponding broadcast frame F₁₋ₙ when the broadcast fingerprint generator 220 generates a broadcast fingerprint 222, 222a according to a gray-UV (YUV) color space. In other words, each pixel of the corresponding broadcast frame F₁₋ₙ is represented by a grayscale value such that the broadcast fingerprint 222, 222a represents the sum and/or average of the grayscale values of a pixel area. In some implementations, the fingerprint 222 (e.g., the broadcast fingerprint 222, 222a) is a unique identifier based on sub-frames F_{sub} of the corresponding broadcast frame F₁₋ₙ. Depending on the pixels per sub-frame F_{sub}, each sub-frame F_{sub} may have a corresponding pixel value Vₚ or a corresponding average pixel value.

Generally, fingerprints 222 may be a source of inaccuracy within the ACR environment 10. The inaccuracy arises because consecutive media device frames F_{D1-n} and consecutive broadcast frames F₁₋ₙ may be very similar, such that consecutive frames only have slight changes over time unless a scene change occurs drastically changing consecutive frames. Due to only slight changes typically between consecutive frames F_{D1-n}, a fingerprint 222 based on one or a small number of pixel values V_{P} may be very similar to a consecutive fingerprint 222 based on the same number of pixels. Therefore, the matching process between fingerprints 222 within the ACR environment 10 may lead to potential matching error (e.g., a false match). In other words, the matcher 300 may determine that the media device stream S_{D} is being viewed by the user 20 at one media device frame F_{D1-n} (a match media device frame F_{MD}) even though the user 20 is actually viewing media content from the media device stream S_{D} a few media device frames F_{D1-n} ahead of or behind the match media device frame F_{MD}.

FIG. 2 also illustrates an example of a broadcast fingerprint 222a, F₁₋ₙ corresponding to a broadcast frame F₁₋ₙ divided into sub-frames F_{sub}. In some examples, the broadcast fingerprint generator 220 may divide each broadcast frame F₁₋ₙ into sub-frames F_{sub} to more accurately compare or to distinguish between broadcast frames F₁₋ₙ. With sub-frames F_{sub}, each fingerprint 222 may represent more than one average pixel value Vₚ of the corresponding frame F₁₋ₙ. By dividing each broadcast frame F₁₋ₙ into sub-frames F_{sub}, more details (e.g., pixels of each sub-frame F_{sub}) are taken into account during broadcast fingerprint generation than broadcast fingerprints 222, 222a based on a pixel value V_{P} (or average pixel value) of an entire broadcast frame F₁₋ₙ. As such, the number of sub-frames F_{sub} that the broadcast fingerprint generator 220 divides each broadcast frame F₁₋ₙ into depends on a desired level of accuracy. For example, as shown in FIG. 2, the broadcast fingerprint generator 220 divides each broadcast frame F₁₋ₙ into sixteen sub-frames F_{sub} defining a four by four array. Each sub-frame F_{sub} of the sixteen sub-frames F_{sub} has an average pixel value Vₚ₁₁₋₄₄ such that each broadcast fingerprint 222a represents each corresponding broadcast frame F₁₋ₙ by a sixteen value integer vector having an integer value associated with each sub-frame F_{sub}. Although the figures may depict each broadcast frame F₁₋ₙ or each media device frame F_{D1-n} as a four by four array, any sub-frame division is possible.

Generally speaking, ACR can be divided into two stages, cold matching and hot matching. Cold matching typically refers to the first stage (or identification stage) of ACR. During the identification stage, ACR first identifies the channel that the user 20 is watching and where in the channel the user 20 is currently watching. Once ACR completes the identification stage, ACR monitors the media device stream S_{D} of the user 20 for updates or changes to the channel that the user 20 is watching. Hot matching generally refers to this second stage or monitoring stage of ACR. Although cold matching is often performed between the network layer 120 and the device layer 130 and hot matching is performed at the device layer 130, connectivity between layers coupled with ACR hardware and/or software may enable any layer or any combination of layers within the ACR environment 10 to communicate and store information to perform cold matching and/or hot matching.

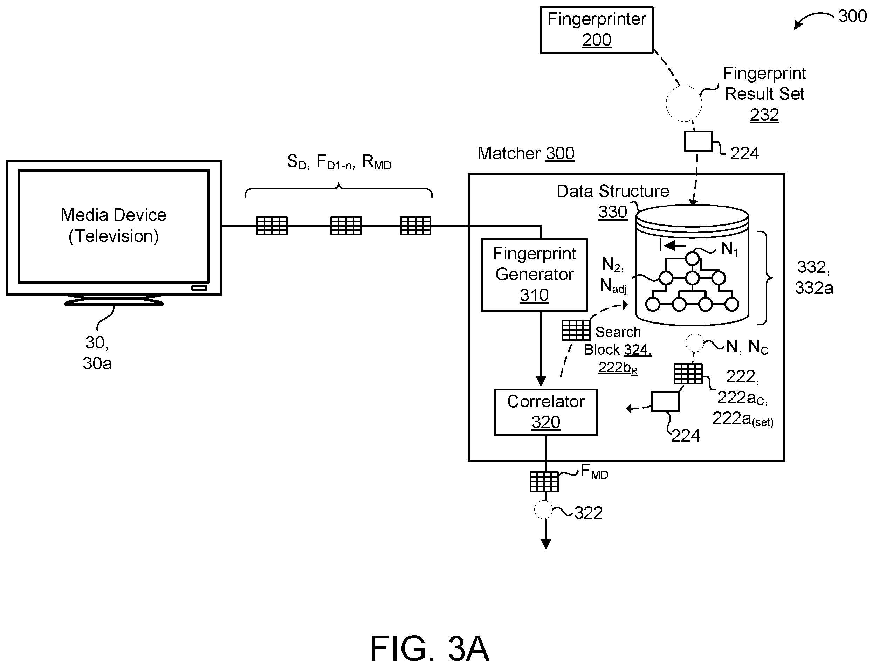

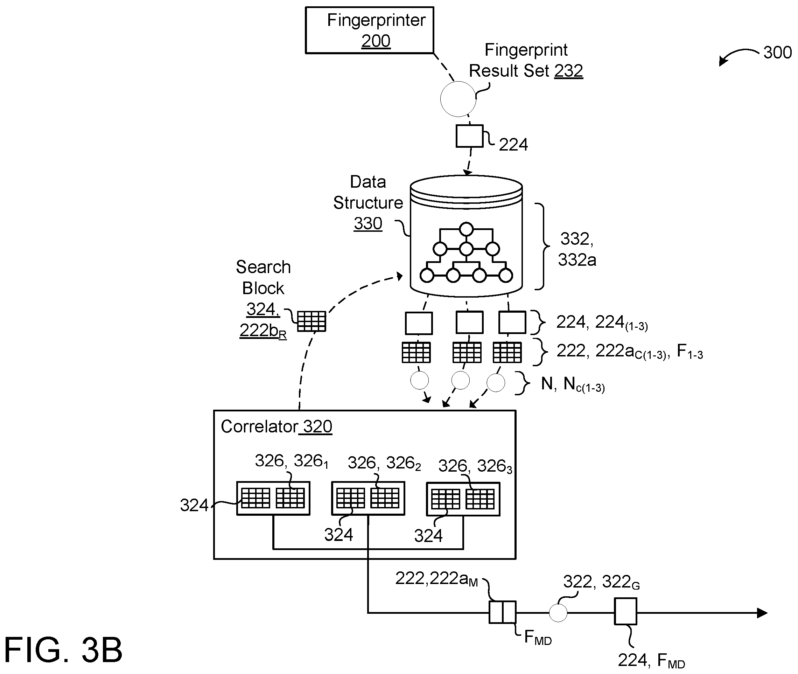

FIGS. 3A and 3B are examples of the matcher 300 of the media device 30 (e.g., the television 30, 30a). The matcher 300 receives media device frames F_{D1-n} captured from a media device stream S_{D}. In some configurations, the matcher 300 receives captured media device frames F_{D1-n} as a set of sequential media device frames F_{D1-n}. The matcher 300 may receive media device frames F_{D1-n} at a media device frame rate R_{MD}. The media device frame rate R_{MD} may be similar to the broadcast frame rate R_{B} or different from the broadcast frame rate R_{B}. Additionally or alternatively, the matcher 300 receives captured media device frames F_{D1-n} in a non-uniform manner (e.g., not a uniform frame capture rate). As an example, the matcher 300 receives captured media device frames F_{D1-n} upon request or selective communication with the media device 30. In other examples, timing delays or communication lags between the matcher 300 and the media device 30 cause non-uniform receipt of captured media device frames F_{D1-n} at the matcher 300 or receipt of non-sequential captured media device frames F_{D1-n}.

Typically, the matcher 300 includes a matcher fingerprint generator 310 and a correlator 320. The matcher fingerprint generator 310 is configured to generate media device fingerprints 222, 222b based on the received media device frames F_{D1-n}. The media device fingerprints 222, 222b are fingerprints 222 that correspond to each media device frame F_{D1-n} received at the matcher 300 from the media device 30 (e.g., the television 30, 30a). The media device fingerprints 222, 222b may represent each media device frame F_{D1-n} as a unique identifier in a representation much like the broadcast fingerprints 222, 222a. Each media device fingerprint 222, 222b represents each corresponding media device frame F_{D1-n} by a value or unique identifier such that the correlator 320 of the matcher 300 may compare the broadcast fingerprints 222, 222a to the media device fingerprints 222, 222b. For example, the matcher fingerprint generator 310 may generate media device fingerprints 222, 222b representing at least one pixel value V_{P} of the media device frame F_{D1-n} of the corresponding media device stream S_{D}. The at least one pixel value Vₚ may correspond to sub-frames F_{sub} of each media device frame F_{D1-n} (e.g., sixteen sub-frames F_{sub} defining a four by four array) such that, in some implementations, the media device fingerprint 222, 222b is a vector of values corresponding to at least one pixel value Vₚ of each sub-frame F_{sub}.

Referring further to FIGS. 3A and 3B, the matcher 300 includes the correlator 320 that determines a match correlation 322 between frames F and/or fingerprints 222 corresponding to frames F. In some examples, the correlator 320 determines the match correlation 322 between at least one media device fingerprint 222, 222b and at least one broadcast fingerprint 222, 222a. When the correlator 320 identifies the match correlation 322, the matcher 300 identifies the at least one media device frame F_{D1-n} corresponding to the match correlation 322 as a match media device frame F_{DM}. For example, when the correlator 320 identifies the at least one media device fingerprint 222, 222b as having the match correlation 322 to the at least one broadcast fingerprint 222, 222a, the matcher 300 identifies the at least one media device fingerprint 222, 222b as corresponding to the match media device frame F_{DM}. The matcher 300 may associate the match media device frame F_{DM} with metadata 224 (e.g., frame data) including a frame number and an associated broadcast channel. For example, the matcher 300 receives metadata 224 corresponding to the at least one broadcast fingerprint 222, 222a of the match correlation 322. By identifying the match media device frame F_{DM}, the matcher 300 associates metadata 224 corresponding to the at least one broadcast fingerprint 222, 222a of the match correlation 322 with the match media device frame F_{DM}. In other words, the match correlation 322 means that the at least one media device frame F_{D1-n} corresponding to the at least one media device fingerprint 222, 222b of the match correlation 322 should have metadata 224 similar to or identical to the at least one broadcast frame F₁₋ₙ corresponding to the at least one broadcast fingerprint 222, 222a of the match correlation 322.

The match correlation 322 is a value that is representative of a similarity (i.e. strength of association). In some examples, the match correlation 322 is a statistical correlation. Statistical correlations are generally two variable (i.e. bivariate) relationships that range from negative one to one where zero represents a lack of relationship, negative values represent an inverse relationship, and positive values represent a proportional relationship. The negative one to one range may represent the strength of association where a value closer to zero represents a weak correlation and a value close to one (i.e. a perfect correlation) represents a strong correlation. Although the negative one to one range represents a simple statistical correlation range, the range may be scaled depending on system design. Preferably, the match correlation 322 is based on a Pearson correlation coefficient where the Pearson correlation coefficient is generally a covariance of two variables divided by a product of a standard deviation of the two variables. Yet even though the Pearson correlation coefficient is preferred for the match correlation 322, the match correlation 322 may be based on any correlation coefficient. Examples of other statistical correlations coefficients include a Kendall rank correlation or a Spearman correlation.

In some examples, the correlator 320 determines the match correlation 322 by compiling a search block 324. The search block 324 may include at least one media device fingerprint 222, 222b or a plurality of media device fingerprints 222, 222b. In some examples, the media device fingerprints 222, 222b of the search block 324 correspond to sequential media device frames F_{Dn+1}, F_{D1-n} captured from the media device stream S_{D}. The correlator 320 receives the at least one media device fingerprint 222, 222b of the search block 324 from the matcher fingerprint generator 310 or alternatively from a database of media device fingerprints 222, 222b either within the matcher 300 or communicating with the matcher 300.

**In** some implementations, the correlator 320 is capable of correlating the search block 324 to the fingerprint database 230. Yet, in these implementations, the size of the fingerprint database 230 may slow real-time advantages of an ACR process. Therefore, instead of slowing these real-time advantages, the correlator 320 may determine the match correlation 322 according to broadcasts fingerprints 222, 222a of the fingerprint result set 232. For example, the sequential broadcast frames F₁₋ₙ of the fingerprint result set 232 corresponds to a first period of time t₁ of the broadcast media stream S_{B}, while the search block 324 corresponds to a second period of time t₂ of the media device stream S_{D} such that the first period of time t₁ is greater than the second period of time t₂. With the first period of time t₁ greater than the second period of time t₂, the ACR environment 10 may ensure the matcher 300 may identify at least one media device fingerprint 222, 222b having the match correlation 322 to the at least one broadcast fingerprint 222, 222a while maintaining real-time processing speeds.

In some configurations, the search block 324 includes, as the at least one media device fingerprint 222, 222b, a most recent media device fingerprint 222, 222b_{R} corresponding to a most recent media device frame F_{D1-n} captured at the media device 30, (e.g., the television 30, 30a). By including the most recent media device fingerprint 222, 222b_{R} within the search block 324, the matcher 300 may determine frame data (e.g., metadata 224) most contemporaneous to media content viewing by the user 20. In other words, the matcher 300 may associate metadata 224 corresponding to the at least one broadcast fingerprint 222, 222a of the match correlation 322 with the at least one media device frame corresponding to the most recent media device fingerprint 222, 222b of the match correlation 322. Thus, the matcher 300 may identify an associated broadcast channel along with a frame location (e.g., a frame number associated with a position) within the broadcast channel.

In some examples, the matcher 300 includes a data structure 330 representing a plurality of broadcast fingerprints 222, 222a (e.g., the fingerprint result set 232). The data structure 330 permits the correlator 320 to compare media device fingerprints 222, 222b (e.g., the search block 324) to broadcast fingerprints 222, 222a. Additionally or alternatively, the data structure 330 enables the correlator 320 to perform a multi-stage correlation process of determining the match correlation 322. The multi-stage correlation process may include a candidate identification process and a match correlation process. In the candidate identification process, the correlator 320 may identify broadcast fingerprints 222, 222a from the data structure 330 as candidate broadcast fingerprints 222, 222a_{c} for the match correlation 322. Generally, a candidate broadcast fingerprint 222, 222a_{c} is a broadcast fingerprint 222, 222a corresponding to a broadcast frame F₁₋ₙ that may match at least one media device fingerprint 222, 222b (e.g., the most recent media device fingerprint 222, 222b_{R}). In examples where the correlator 320 compiles the search block 324, the candidate broadcast fingerprint 222, 222a_{c} is a broadcast fingerprint 222, 222a corresponding to a broadcast frame F₁₋ₙ that may match at least one media device fingerprint 222, 222b of the search block 324. By identifying at least one candidate broadcast fingerprint 222, 222a_{c} for the match correlation 322, the matcher 300 may reduce processing time at the correlator 320 during the match correlation process because the correlator 320 may perform the match correlation 322 with less broadcast fingerprints 222, 222a (e.g., the identified candidate broadcast fingerprints 222, 222a_{c}). In other words, in a single stage correlation process, the correlator 320 may perform the match correlation 322 with broadcast fingerprints 222, 222a of the fingerprint result set 232 and/or the data structure 330 rather than merely identified candidate broadcast fingerprints 222, 222a_{c}. In the match correlation process, the correlator 320 may receive the at least one candidate broadcast fingerprint 222, 222a_{c} and may determine the match correlation 322 based on the at least one candidate broadcast fingerprint 222, 222a_{c}.

In some implementations, the data structure 330 represents the plurality of broadcast fingerprints 222, 222a by nodes N. Each node N₍₁₋ₙ₎ may constitute a broadcast fingerprint 222, 222a corresponding to a broadcast frame F₁₋ₙ. With nodes N, the correlator 320 may search the data structure 330 and identify at least one candidate node N, N_{c} corresponding to a candidate broadcast fingerprint 222, 222a_{c}. Each node N₍₁₋ₙ₎ may also include metadata 224 (e.g., a frame location, a type of frame, or a fingerprint identifier tag) or may include a reference to metadata 224. The matcher 300 may associate metadata 224 or the reference to metadata 224 with each candidate broadcast fingerprint 222, 222a_{c}. In other words, after searching the data structure 330, the matcher 300 and/or the correlator 320 may receive at least one candidate node N, N_{c} indicating at least one candidate broadcast fingerprint 222, 222a_{c} for the match correlation 322 along with metadata 224 relating to the broadcast frame F₁₋ₙ of the at least one candidate broadcast fingerprint 222, 222a_{c} received as the at least one candidate node N, N_{c}.

In some examples, each node N₍₁₋ₙ₎ references a sequential array of broadcast frames F₁₋ₙ (e.g., broadcast frames F₁₋ₙ related to the fingerprint result set 232) such that when the correlator 320 determines at least one candidate broadcast fingerprint 222, 222a_{c} (e.g., by a candidate node N, N_{c}) the correlator 320 may also identify a frame location corresponding to the at least one candidate broadcast fingerprint 222, 222a_{c}. The sequential array of broadcast frames F₁₋ₙ may enable the matcher 300 to select a set of broadcast fingerprints 222, 222aₛₑₜ corresponding to a set of broadcast frames F₁₋ₙ₍ₛₑₜ₎ to compare with the search block 324 as a match correlation block 326 (e.g., shown in FIG. 3B). The set of broadcast fingerprints 222, 222aₛₑₜ selected by the matcher 300 often includes the at least one candidate broadcast fingerprint 222, 222a_{c} identified during the candidate identification process along with a selected number of broadcast fingerprints 222, 222a sequentially adjacent (e.g., proceeding or subsequent to) to the at least one candidate broadcast fingerprint 222, 222a_{c} identified during the candidate identification process. The number of broadcast fingerprints 222, 222a within the set of broadcast fingerprints 222, 222aₛₑₜ may correspond to the media device fingerprints 222, 222b of the search block 324 such that the correlator 320 may perform the match correlation 322 by comparing an equal number of broadcast fingerprints 222, 222a to an equal number of media device fingerprints 22, 222b.

During a multi-stage correlation process, the correlator 320 may perform searches, such as a range search or a nearest neighbor search, of the data structure 330 to identify the at least one candidate broadcast fingerprint 222, 222a_{c}. In some examples, when the correlator 320 performs searches, the correlator 320 searches the data structure 330 using a search metric such as a distance (e.g., a Euclidean distance, a Manhattan distance, etc.). FIG. 3A illustrates an example of a nearest neighbor search. Typically, nearest neighbor searches are proximity searches such that a nearest neighbor search provides an output most similar in proximity to an input. For example, given a set S of points in a space N and an input point P, a nearest neighbor search returns a point closest to input point P in the set S within space N. In some examples, such as FIG. 3A, the correlator 320 performs a nearest neighbor search using Euclidean distance as the search metric. FIG. 3A depicts the input of the candidate identification process as the at least one media device fingerprint 222, 222b (e.g., the most recent media device fingerprint 222, 222b_{R}) of the search block 324. In these examples, the correlator 320 determines the distance between the at least one media device fingerprint 222, 222b of the search block 324 and each node N within the data structure 330. As a result of a nearest neighbor search, the correlator 320 may identify a broadcast fingerprint 222, 222a of a node N corresponding to a minimum of each distance determined by the correlator 320 as a candidate broadcast fingerprint 222, 222a_{c}.

FIG. 3B is an example that the correlator 320 may identify multiple candidate broadcast fingerprints 222, 222a_{c}. In some implementations, the correlator 320 identifies multiple candidate broadcast fingerprints 222, 222a_{c} using a range search. Generally, a range search is a search that, based on an input, provides an output or outputs within a given range. For instance, given a set S of points in a space N, an input point P, and an input range R, a range search may return all points related to the input point P within the set S that satisfies the input range R. In some examples, a range search identifies a set of outputs that correspond to a proximity range. When the correlator 320 performs a range search according to a predetermined proximity range, the correlator 320 may identify at least one broadcast fingerprint 222, 222a of a node N with a search metric within the predetermined proximity range as a candidate broadcast fingerprint 222, 222a_{c}. As an example, the correlator 320 receives a proximity range that corresponds to a distance of 0-1.0 between the at least one media device frame 222, 222b and the broadcast frame 222, 222a of a node N. With the received proximity range of 0-1.0, the correlator 320 may determine the search metric (e.g., the distance) between the at least one media device frame 222, 222b (e.g., from the search block 324) and each node N of the data structure 330. In this example, the correlator 320 identifies each node N satisfying the proximity range 0-1.0 according to the search metric as a candidate broadcast fingerprint 222, 222a_{c}. In some implementations, such as FIG. 3B, the correlator 320 identifies three candidate nodes N, Nc₍₁₋₃₎ corresponding to three candidate broadcast fingerprints 222, 222a_{c(1-3)} as the at least one candidate broadcast fingerprint 222, 222a_{c}. Additionally or alternatively, as shown by FIG. 3B, the correlator 320 may receive or may retrieve metadata 224 corresponding to each candidate broadcast fingerprint 222, 222a_{c} identified.

As shown in FIGS. 3A and 3B, the data structure 330 may be organized to optimize the candidate identification process. In some implementations, the data structure 330 is a tree data structure 332 (e.g., a binary search tree 332, 332a) of two or more dimensions, such as range tree or a k-d tree. A tree data structure 332 may enable the correlator 320 to perform searches of the data structure 330 without necessarily needing to determine the search metric between the at least one media device fingerprint 222, 222b of the search block 324 and each node N within the data structure 330. Instead as shown in FIG. 3A, the data structure 330, such as a tree data structure 332, may provide correlator 320 with an indication I of an adjacent node N_{adj} to search within the data structure 330. In some examples, the correlator 320 searches for a node N relating to minima or maxima of the search metric. In the case of distance, the correlator 320 searches for a node N relating to minima of the distance between a node N and the at least one media device fingerprint 222, 222a of the search block 324. In this example, the data structure 330 is organized such that when the correlator 320 determines a first search metric related to a first node N₁, the correlator 320 identifies the indication I of the first search metric and determines a second search metric related to an adjacent second node N₂, N_{adj} to the first node N₁ in a direction corresponding to the indication I. For example, at the first node N₁, the correlator 320 may determine a distance of 3.50 between a broadcast fingerprint 222, 222a of the first node N₁ and the at least one media device fingerprint 222, 222a of the search block 324. The distance of 3.50 may indicate that the correlator 320 next perform the second search metric at the second node N₂ at a left side of the first node N₁. In this example, the data structure 330 is organized such that moving leftward of the first node N₁ corresponds to reducing the distance between a broadcast fingerprint 222, 222a of the second node N₂ and the at least one media device fingerprint 222, 222a of the search block 324. Although FIGS. 3A and 3B illustrate two dimensional data structures 330, the data structure 330 may occur in two or more dimensions such that the directional indication I may also occur with respect to two or more dimensions. By indicating the subsequent adjacent node N_{adj} to search, the organization of the data structure 330 may optimize the number of nodes N the correlator 320 searches within the data structure 330. Therefore, an inherent advantage of some data structures 330 is that these data structures 330 may reduce the processing time of the candidate identification process while potentially increasing an accuracy of the match correlation process. Accordingly, the data structure 330 allows an organized iterative correlation process to help identify the at least one candidate broadcast fingerprint 222, 222a_{c}.

In some examples, the correlator 320 may determine that the search block 324 includes at least one media device fingerprint 222, 222b having the match correlation 322 to more than one broadcast fingerprint 222, 222a. For example, in the case of FIG. 3B, the correlator 320 identified in the candidate identification process more than one candidate broadcast fingerprint 222, 222a_{c}. When the search block 324 includes at least one media device fingerprint 222, 222b having the match correlation 322 to more than one broadcast fingerprint 222, 222a (e.g., more than one candidate broadcast fingerprint 222, 222a_{c}), the correlator 320 may perform the match correlation 322 with each candidate broadcast fingerprint 222, 222a_{c}. As an example, FIG, 3B depicts the correlator 320 determining the match correlation 322 between the search block 324 and each match correlation block 326. As a result of the match correlation 322 between the search block 324 and each match correlation block 326, the correlator 320 determines a match media device frame F_{MD} as the media device frame F_{D} corresponding to the media device fingerprint 222, 222b of the at least one media device fingerprint 222, 222b of the search block 324 that has the greatest match correlation 322, 322_{G} with a match broadcast fingerprint 222, 222a_{M} of the candidate broadcast fingerprints 222, 222a_{c}.

As an example, the matcher 300 receives five minutes of broadcast fingerprints 222, 222a_{(1-9,000)} as the fingerprint result set 232 corresponding to 9,000 sequential broadcast frames F₁₋₉₀₀₀. The matcher 300 may also receive metadata 224 associated with the broadcast fingerprints 222, 222a_{(1-9,000)} or may later retrieve metadata 224 from the fingerprinter 200 when the matcher 300 identifies the match media device frame F_{MD}. The correlator 320 receives media device fingerprints 222, 222b corresponding to captured media device frames F_{D1-n} from the media device stream S_{D} from the matcher fingerprint generator 310. In this example, the correlator 320 receives sixty media device fingerprints 222, 222b₍₁₋₆₀₎ corresponding to two seconds (i.e. a frame rate R_{MD} of thirty frames per second) of the media device stream S_{D} captured at the TV 30, 30a. Here, these sixty media device fingerprints 222, 222b₍₁₋₆₀₎ become the search block 324. When this example is a single stage correlation process, the correlator 320 may determine that at least one media device fingerprint 222, 222b (e.g., the most recent media device fingerprint 222, 222b_{R}) of the sixty media device fingerprints 222, 222b₍₁₋₆₀₎ has a match correlation 322 to at least one broadcast fingerprint 222, 222a of the fingerprint result set 232. In the single stage correlation process, the corresponding media device frame F_{D} of the at least one media device fingerprint 222, 222b that has the match correlation 322 is the match media device frame F_{MD}. When this example is a multi-stage correlation process, the correlator 320 may compare the at least one media device fingerprint 222, 222b (e.g., the most recent media device fingerprint 222, 222b_{R}) of the search block 324 to the data structure 330 and identify at least one node N with at least one corresponding candidate broadcast fingerprint 222, 222a_{c}. With the at least one candidate broadcast fingerprint 222, 222a_{c}, the correlator 320 may generate match correlation blocks 326 for each identified candidate broadcast fingerprint 222, 222a_{c}. Because, in this example, the search block 326 is sixty media device fingerprints 222, 222b₍₁₋₆₀₎, each match correlation block 326 is sixty broadcast fingerprints 222, 222a₍₁₋₆₀₎ including a candidate broadcast fingerprint 222, 222a_{c}. The correlator 320 may then determine that at least one media device fingerprint 222, 222b (e.g., the most recent media device fingerprint 222, 222b_{R}) of the search block 324 has a match correlation 322 to at least one broadcast fingerprint 222, 222a of a match correlation block 326. Similar to a single stage correlation process, the corresponding media device frame F_{D} of the at least one media device fingerprint 222, 222b that has the match correlation 322 is the match media device frame F_{MD}.

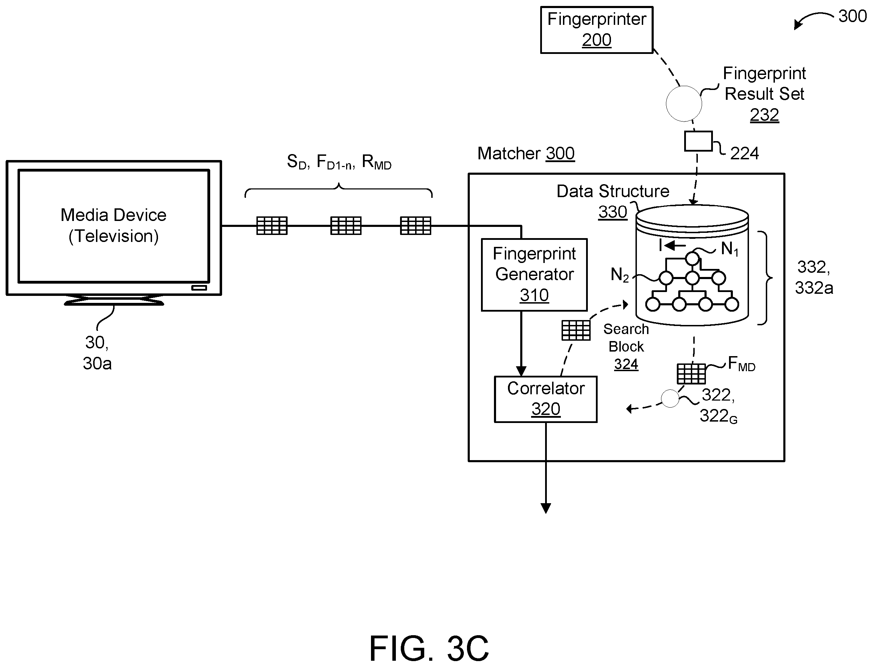

Optionally, FIG. 3C depicts that the correlator 320 may use the data structure 330 to perform an iterative match correlation process without a candidate identification process. As an example, the correlator 320 determines the match correlation 322 between at least one media device fingerprint 222, 222b of the search block 324 and a first node N₁ corresponding to at least one broadcast fingerprint 222, 222a. With the match correlation 322 at the first node N₁, the match correlation 322 provides indication I of a second node N₂ that is a neighbor to the first node N₁ that may further optimize the match correlation 322. For example, at the first node N₁ the correlator 320 may determine the match correlation 322 is a value of 0.55. The value of 0.55 represents a moderate proportional association indicating that the correlator 320 next perform a second match correlation 322, 322b with a second node N₂ at a left side of the first node N₁. In this example, moving to the leftward of the first node N₁ may correspond to increasing proportional strength of association for the match correlation 322. Therefore, the data structure 330 allows an organized iterative correlation process to help return the greatest match correlation 322, 322_{G}.

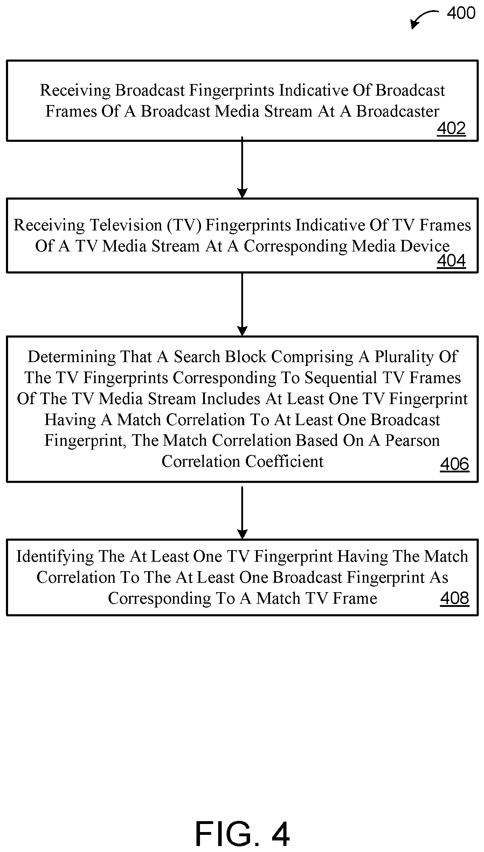

FIG. 4 is a method 400 for cold matching during automatic content recognition. At block 402, the method 400 includes receiving, at data processing hardware, broadcast fingerprints indicative of broadcast frames of a broadcast media stream at a broadcaster. At block 404, the method 400 further includes receiving, at the data processing hardware, media device fingerprints indicative of media device frames of a media device stream at a corresponding media device. At block 406, the method 400 also includes determining, by the data processing hardware, that a search block comprising a plurality of the media device fingerprints corresponding to sequential media device frames of the media device stream includes at least one media device fingerprint having a match correlation to at least one broadcast fingerprint where the match correlation based on a Pearson correlation coefficient. At block 408, the method 400 also includes identifying, by the data processing hardware, the at least one media device fingerprint having the match correlation to the at least one broadcast fingerprint as corresponding to a match media device frame.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

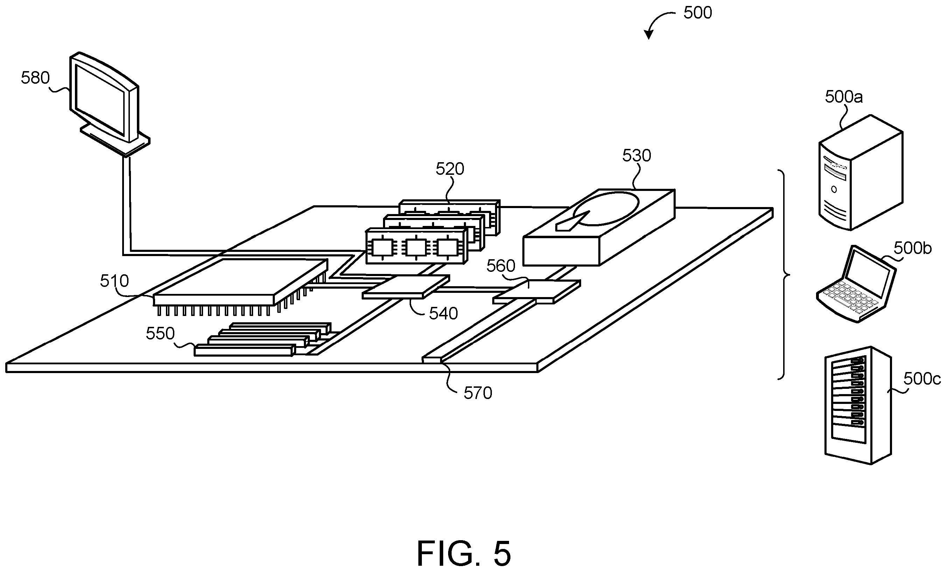

FIG. 5 is schematic view of an example computing device 500 that may be used to implement the systems and methods described in this document. The computing device 500 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 500 includes a processor 510, memory 520, a storage device 530, a high-speed interface/controller 540 connecting to the memory 520 and high-speed expansion ports 550, and a low speed interface/controller 560 connecting to a low speed bus 570 and a storage device 530. Each of the components 510, 520, 530, 540, 550, and 560, are interconnected using various busses, and may be mounted on a common motherboard or in other manners as appropriate. The processor 510 can process instructions for execution within the computing device 500, including instructions stored in the memory 520 or on the storage device 530 to display graphical information for a graphical user interface (GUI) on an external input/output device, such as display 580 coupled to high speed interface 540. In other implementations, multiple processors and/or multiple buses may be used, as appropriate, along with multiple memories and types of memory. Also, multiple computing devices 500 may be connected, with each device providing portions of the necessary operations (e.g., as a server bank, a group of blade servers, or a multi-processor system).

The memory 520 stores information non-transitorily within the computing device 500. The memory 520 may be a computer-readable medium, a volatile memory unit(s), or non-volatile memory unit(s). The non-transitory memory 520 may be physical devices used to store programs (e.g., sequences of instructions) or data (e.g., program state information) on a temporary or permanent basis for use by the computing device 500. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 530 is capable of providing mass storage for the computing device 500. In some implementations, the storage device 530 is a computer-readable medium. In various different implementations, the storage device 530 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 520, the storage device 530, or memory on processor 510.

The high speed controller 540 manages bandwidth-intensive operations for the computing device 500, while the low speed controller 560 manages lower bandwidth-intensive operations. Such allocation of duties is exemplary only. In some implementations, the high-speed controller 540 is coupled to the memory 520, the display 580 (e.g., through a graphics processor or accelerator), and to the high-speed expansion ports 550, which may accept various expansion cards (not shown). In some implementations, the low-speed controller 560 is coupled to the storage device 530 and a low-speed expansion port 590. The low-speed expansion port 590, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 500a or multiple times in a group of such servers 500a, as a laptop computer 500b, or as part of a rack server system 500c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

## Claims

1. A method of identifying media provided for viewing at a media device, the method comprising:
receiving, at data processing hardware (212), sequential broadcast frames (F₁₋ₙ) of a broadcast media stream (S_{B}, S_{C}), the sequential broadcast frames (F₁₋ₙ) corresponding to a first time period of the broadcast media stream (S_{B}, S_{C});
generating, by the data processing hardware (212), broadcast fingerprints (222a) indicative of the sequential broadcast frames (F₁₋ₙ) of the broadcast media stream (S_{B}, Sc);
receiving, by the data processing hardware (212), sequential media device frames (FD1-n) of a media device stream (SD) provided for viewing at the media device;
compiling, by the data processing hardware (212), a search block (324) of media device fingerprints (222b) indicative of the sequential media device frames (FD1-n) of the media device stream (S_{D}) provided for viewing at the media device, the sequential media device frames (F_{D1-n}) of the search block (324) corresponding to a second time period of the media device stream, the second time period being shorter than the first time period;
comparing, by the data processing hardware (212), (i) the search block (324) of the media device fingerprints (222b) indicative of the sequential media device frames (FD1-n) corresponding to the second time period of the media device stream (S_{D}) with (ii) the broadcast fingerprints (222a) indicative of the sequential broadcast frames (F₁₋ₙ) corresponding to the first time period of the broadcast media stream (S_{B}, S_{C});
establishing, by the data processing hardware (212), based on the comparing, a match correlation (322) between at least one media device fingerprint (222b) of the search block (324) and at least one of the broadcast fingerprints (222a), wherein establishing the match correlation (322) is based on a Pearson correlation coefficient, wherein the at least one media device fingerprint (222b) corresponds with at least one of the media device frames (F_{D1-n}), and wherein the at least one broadcast fingerprint (222a) corresponds with at least one of the broadcast frames (F₁₋ₙ); and
associating, by the data processing hardware (212), based on the established match correlation (322), metadata corresponding to the at least one broadcast fingerprint (222a) with the at least one media device frame, the metadata comprising a broadcast channel identification and frame location, the method further comprising:
determining, by the data processing hardware (212), whether the search block (324) includes at least one media device fingerprint (222b) having the match correlation (322) to more than one broadcast fingerprint (222a); and
when the search block (324) includes at least one media device fingerprint (222b) having the match correlation (322) to more than one broadcast fingerprint (222a):
determining, by the data processing hardware (212), a set of broadcast fingerprints (222aₛₑₜ) corresponding to the at least one media device fingerprint (222b) of the search block (324), each broadcast fingerprint (222a) of the set of broadcast fingerprints (222aₛₑₜ) being broadcast fingerprints of sequentially adjacent broadcast frames of the broadcast media stream (S_{B}, S_{C}); and
determining, by the data processing hardware (212), the match correlation (322) as a Pearson correlation coefficient between the search block (324) and the set of broadcast fingerprints (222aₛₑₜ).

2. The method of claim 1, further comprising determining, by the data processing hardware (212), a match media device frame (F_{MD}) as the media device frame (F_{D}) corresponding to the media device fingerprint (222b) of the at least one media device fingerprint (222b) of the search block (324) having the greatest Pearson correlation coefficient with a match broadcast fingerprint (222a_{M}) of the set of broadcast fingerprints (222aₛₑₜ).

3. The method of any of claims 1-2, wherein each fingerprint (222) represents at least one pixel value (Vₚ) of the frame (F) of the corresponding media stream (S).

4. The method of any of claims 1-3, wherein each fingerprint (222) is an average pixel value (Vₚ) representing a sum of a grayscale value of a corresponding frame (F).

5. The method of any of claims 1-4, wherein each fingerprint (222) represents more than one average pixel value (Vₚ) of a sub-frame (F_{sub}) within a corresponding frame (F), optionally wherein each fingerprint (222) of the corresponding frame (F) is represented as a sixteen integer vector corresponding to each average pixel value (Vₚ) of sixteen sub-frames (F_{sub}), the sixteen sub-frames (F_{sub}) defining a four by four array of the corresponding frame (F).

6. The method of any of claims 1-5, wherein comparing the search block (324) of the media device fingerprints (222b) with the broadcast fingerprints (222a) comprises comparing the search block (324) to a database structure defined by a plurality of broadcast fingerprints wherein the database structure is a binary search tree.

7. A system comprising:
data processing hardware (212); and
memory hardware (214) in communication with the data processing hardware (212), the memory hardware (214) storing instructions that when executed on the data processing hardware (212) cause the data processing hardware (212) to perform operations comprising:
receiving, sequential broadcast frames (F1-n) of a broadcast media stream (SB, SC), the sequential broadcast frames (F1-n) corresponding to a first time period of the broadcast media stream (SB, SC);
generating broadcast fingerprints (222a) indicative of the sequential broadcast frames (F1-n) of the broadcast media stream (SB, SC);
receiving sequential media device frames (FD1-n) of a media device stream (SD) provided for viewing at the media device;
compiling a search block (324) of media device fingerprints (222b) indicative of the sequential media device frames (FD1-n) of the media device stream (S_{D}) provided for viewing at the media device, the sequential media device frames (FD1-n) of the search block (324) corresponding to a second time period of the media device stream, the second time period being shorter than the first time period;
comparing (i) the search block (324) of the media device fingerprints (222b) indicative of the sequential media device frames (F_{D1-n}) corresponding to the second time period of the media device stream (S_{D}) with (ii) the broadcast fingerprints (222a) indicative of the sequential broadcast frames (F₁₋ₙ) corresponding to the first time period of the broadcast media stream (S_{B}, S_{C});
establishing based on the comparing, a match correlation (322) between at least one media device fingerprint (222b) of the search block (324) and at least one of the broadcast fingerprints (222a), wherein establishing the match correlation (322) is based on a Pearson correlation coefficient, wherein the at least one media device fingerprint (222b) corresponds with at least one of the media device frames (F_{D1-n}), and wherein the at least one broadcast fingerprint (222a) corresponds with at least one of the broadcast frames (F₁₋ₙ); and
associating, based on the established match correlation (322), metadata corresponding to the at least one broadcast fingerprint (222a) with the at least one media device frame, the metadata comprising a broadcast channel identification and frame location, wherein the operations further comprise:
determining whether the search block (324) includes at least one media device fingerprint (222b) having the match correlation (322) to more than one broadcast fingerprint (222a); and
when the search block (324) includes at least one media device fingerprint (222b) having the match correlation (322) to more than one broadcast fingerprint (222a):
determining a set of broadcast fingerprints (222aₛₑₜ) corresponding to the at least one media device fingerprint (222b) of the search block (324), each broadcast fingerprint (222a) of the set of broadcast fingerprints (222aₛₑₜ) being broadcast fingerprints of sequentially adjacent broadcast frames of the broadcast media stream (S_{B}, Sc); and
determining the match correlation (322) as a Pearson correlation coefficient between the search block (324) and the set of broadcast fingerprints (222aₛₑₜ),

8. The system of claim 7, wherein the operations further comprise determining a match media device frame (F_{MD}) as the media device frame (F_{D}) corresponding to the media device fingerprint (222b) of the at least one media device fingerprint (222b) of the search block (324) having the greatest Pearson correlation coefficient with a match broadcast fingerprint (222a_{M}) of the set of broadcast fingerprints (222aₛₑₜ).

9. The system of any of claims 7-8, wherein each fingerprint (222) represents at least one pixel value (Vₚ) of the frame (F) of the corresponding media stream (S).

10. The system of any of claims 7-9, wherein each fingerprint (222) is an average pixel value (Vₚ) representing a sum of a grayscale value of a corresponding frame (F).

11. The system of any of claims 7-10, wherein each fingerprint (222) represents more than one average pixel value (Vₚ) of a sub-frame (F_{sub}) within a corresponding frame (F),
optionally wherein each fingerprint (222) of the corresponding frame (F) is represented as a sixteen integer vector corresponding to each average pixel value (Vₚ) of sixteen sub-frames (F_{sub}), the sixteen sub-frames (F_{sub}) defining a four by four array of the corresponding frame (F).

12. The system of any of claims 7-11, wherein comparing the search block (324) of the media device fingerprints (222b) with the broadcast fingerprints (222a) comprises comparing the search block (324) to a database structure defined by a plurality of broadcast fingerprints wherein the database structure is a binary search tree.

13. A non-transitory memory storing program instructions executable by a processor to carry out operations including:
receiving sequential broadcast frames (F1-n) of a broadcast media stream (SB, SC), the sequential broadcast frames (F1-n) corresponding to a first time period of the broadcast media stream (SB, SC);
generating broadcast fingerprints (222a) indicative of the sequential broadcast frames (F1-n) of the broadcast media stream (SB, SC);
receiving sequential media device frames (FD1-n) of a media device stream (SD) provided for viewing at the media device;
compiling a search block (324) of media device fingerprints (222b) indicative of the sequential media device frames (FD1-n) of the media device stream (S_{D}) provided for viewing at the media device, the sequential media device frames of the search block (324) corresponding to a second time period of the media device stream (S_{D}), the second time period being shorter than the first time period;
comparing, (i) the search block (324) of the media device fingerprints (222b) indicative of the sequential media device frames (F_{D1-n}) corresponding to the second time period of the media device stream (S_{D}) with (ii) the broadcast fingerprints (222a) indicative of the sequential broadcast frames (F₁₋ₙ) corresponding to the first time period of the broadcast media stream (S_{B}, S_{C});
establishing, based on the comparing, a match correlation (322) between at least one media device fingerprint (222b) of the search block (324) and at least one of the broadcast fingerprints (222a), wherein establishing the match correlation (322) is based on a Pearson correlation coefficient, wherein the at least one media device fingerprint (222b) corresponds with at least one of the media device frames (F_{D1-n}), and wherein the at least one broadcast fingerprint (222a) corresponds with at least one of the broadcast frames (F₁₋ₙ); and
associating, based on the established match correlation (322), metadata corresponding to the at least one broadcast fingerprint (222a) with the at least one media device frame, the metadata comprising a broadcast channel identification and frame location, wherein the operations further comprise:
determining whether the search block (324) includes at least one media device fingerprint (222b) having the match correlation (322) to more than one broadcast fingerprint (222a); and
when the search block (324) includes at least one media device fingerprint (222b) having the match correlation (322) to more than one broadcast fingerprint (222a):
determining a set of broadcast fingerprints (222aₛₑₜ) corresponding to the at least one media device fingerprint (222b) of the search block (324), each broadcast fingerprint (222a) of the set of broadcast fingerprints (222aₛₑₜ) being broadcast fingerprints of sequentially adjacent broadcast frames of the broadcast media stream (S_{B}, Sc); and
determining the match correlation (322) as a Pearson correlation coefficient between the search block (324) and the set of broadcast fingerprints (222aₛₑₜ).

## Patentansprüche

1. Verfahren zum Identifizieren von Medien, die zum Ansehen auf einer Medienvorrichtung bereitgestellt werden, wobei das Verfahren Folgendes umfasst:
Empfangen sequentieller Rundfunkrahmen (F₁₋ₙ) eines Rundfunkmedienstroms (S_{B}, S_{C}) an Datenverarbeitungshardware (212), wobei die sequentiellen Rundfunkrahmen (F₁₋ₙ) einem ersten Zeitraum des Rundfunkmedienstroms (S_{B}, S_{C}) entsprechen;
Generieren, durch die Datenverarbeitungshardware (212), von Rundfunkfingerabdrücken (222a), die auf die sequentiellen Rundfunkrahmen (F₁₋ₙ) des Rundfunkmedienstroms (S_{B}, S_{C}) hinweisen;
Empfangen, durch die Datenverarbeitungshardware (212), sequentieller Medienvorrichtungsrahmen (FD1-n) eines Medienvorrichtungsstroms (SD), der zum Ansehen auf der Medienvorrichtung bereitgestellt ist;
Kompilieren, durch die Datenverarbeitungshardware (212), eines Suchblocks (324) von Medienvorrichtungsfingerabdrücken (222b), die auf die sequentiellen Medienvorrichtungsrahmen (F_{D1-n}) des Medienvorrichtungsstroms (S_{D}) hinweisen, der zum Ansehen auf der Medienvorrichtung bereitgestellt ist, wobei die sequentiellen Medienvorrichtungsrahmen (F_{D1-n}) des Suchblocks (324) einem zweiten Zeitraum des Medienvorrichtungsstroms entsprechen, wobei der zweite Zeitraum kürzer als der erste Zeitraum ist;
Vergleichen, durch die Datenverarbeitungshardware (212), (i) des Suchblocks (324) der Medienvorrichtungsfingerabdrücke (222b), die auf die sequentiellen Medienvorrichtungsrahmen (F_{D1-n}) hinweisen, die dem zweiten Zeitraum des Medienvorrichtungsstroms (S_{D}) entsprechen, mit (ii) den Rundfunkfingerabdrücken (222a), die auf die sequentiellen Rundfunkrahmen (F₁₋ₙ) hinweisen, die dem ersten Zeitraum des Rundfunkmedienstroms (S_{B}, S_{C}) entsprechen;
Herstellen, durch die Datenverarbeitungshardware (212), basierend auf dem Vergleichen, einer Anpassungskorrelation (322) zwischen mindestens einem Medienvorrichtungsfingerabdruck (222b) des Suchblocks (324) und mindestens einem der Rundfunkfingerabdrücke (222a), wobei das Herstellen der Anpassungskorrelation (322) auf einem Pearson-Korrelationskoeffizienten basiert, wobei der mindestens eine Medienvorrichtungsfingerabdruck (222b) mindestens einem der Medienvorrichtungsrahmen (F_{D1-n}) entspricht und wobei der mindestens eine Rundfunkfingerabdruck (222a) mindestens einem der Rundfunkrahmen (F₁₋ₙ) entspricht; und
Assoziieren, durch die Datenverarbeitungshardware (212), basierend auf der hergestellten Anpassungskorrelation (322), von Metadaten, die dem mindestens einen Rundfunkfingerabdruck (222a) entsprechen, mit dem mindestens einen Medienvorrichtungsrahmen, wobei die Metadaten eine Rundfunkkanalidentifikation und einen Rahmenort umfassen, wobei das Verfahren ferner Folgendes umfasst:
Bestimmen, durch die Datenverarbeitungshardware (212), ob der Suchblock (324) mindestens einen Medienvorrichtungsfingerabdruck (222b) einschließt, der die Anpassungskorrelation (322) zu mehr als einem Rundfunkfingerabdruck (222a) aufweist; und
wenn der Suchblock (324) mindestens einen Medienvorrichtungsfingerabdruck (222b) einschließt, der die Anpassungskorrelation (322) zu mehr als einem Rundfunkfingerabdruck (222a) aufweist:
Bestimmen, durch die Datenverarbeitungshardware (212), eines Satzes von Rundfunkfingerabdrücken (222aₛₑₜ), der dem mindestens einen Medienvorrichtungsfingerabdruck (222b) des Suchblocks (324) entspricht, wobei es sich bei jedem Rundfunkfingerabdruck (222a) des Satzes von Rundfunkfingerabdrücken (222aₛₑₜ) um Rundfunkfingerabdrücke sequentiell benachbarter Rundfunkrahmen des Rundfunkmedienstroms (S_{B}, S_{C}) handelt; und
Bestimmen, durch die Datenverarbeitungshardware (212), der Anpassungskorrelation (322) als einen Pearson-Korrelationskoeffizienten zwischen dem Suchblock (324) und dem Satz von Rundfunkfingerabdrücken (222aₛₑₜ).

2. Verfahren nach Anspruch 1, ferner umfassend Bestimmen, durch die Datenverarbeitungshardware (212), eines Anpassungsmedienvorrichtungsrahmens (F_{MD}) als den Medienvorrichtungsrahmen (F_{D}), der dem Medienvorrichtungsfingerabdruck (222b) des mindestens einen Medienvorrichtungsfingerabdrucks (222b) des Suchblocks (324) entspricht, der den größten Pearson-Korrelationskoeffizienten mit einem Anpassungsrundfunkfingerabdruck (222a_{M}) des Satzes von Rundfunkfingerabdrücken (222aₛₑₜ) aufweist.

3. Verfahren nach einem der Ansprüche 1-2, wobei jeder Fingerabdruck (222) mindestens einen Pixelwert (Vₚ) des Rahmens (F) des entsprechenden Medienstroms (S) darstellt.

4. Verfahren nach einem der Ansprüche 1-3, wobei jeder Fingerabdruck (222) ein durchschnittlicher Pixelwert (Vₚ) ist, der eine Summe eines Graustufenwerts eines entsprechenden Rahmens (F) darstellt.

5. Verfahren nach einem der Ansprüche 1-4, wobei jeder Fingerabdruck (222) mehr als einen durchschnittlichen Pixelwert (Vₚ) eines Unterrahmens (F_{sub}) innerhalb eines entsprechenden Rahmens (F) darstellt,
wobei optional jeder Fingerabdruck (222) des entsprechenden Rahmens (F) als ein Sechzehn-Ganzzahl-Vektor dargestellt ist, der jedem durchschnittlichen Pixelwert (Vₚ) von sechzehn Unterrahmen (F_{sub}) entspricht, wobei die sechzehn Unterrahmen (F_{sub}) ein Vier-mal-Vier-Array des entsprechenden Rahmens (F) definieren.

6. Verfahren nach einem der Ansprüche 1-5, wobei das Vergleichen des Suchblocks (324) der Medienvorrichtungsfingerabdrücke (222b) mit den Rundfunkfingerabdrücken (222a) Vergleichen des Suchblocks (324) mit einer Datenbankstruktur umfasst, die durch eine Vielzahl von Rundfunkfingerabdrücken definiert ist, wobei die Datenbankstruktur ein binärer Suchbaum ist.

7. System, umfassend:
Datenverarbeitungshardware (212); und
Speicherhardware (214) in Kommunikation mit der Datenverarbeitungshardware (212), wobei die Speicherhardware (214) Anweisungen speichert, die, wenn sie auf der Datenverarbeitungshardware (212) ausgeführt werden, die Datenverarbeitungshardware (212) veranlassen, Operationen durchzuführen, umfassend:
Empfangen sequentieller Rundfunkrahmen (F1-n) eines Rundfunkmedienstroms (SB, SC), wobei die sequentiellen Rundfunkrahmen (F1-n) einem ersten Zeitraum des Rundfunkmedienstroms (SB, SC) entsprechen;
Generieren von Rundfunkfingerabdrücken (222a), die auf die sequentiellen Rundfunkrahmen (F1-n) des Rundfunkmedienstroms (SB, SC) hinweisen;
Empfangen sequentieller Medienvorrichtungsrahmen (FD1-n) eines Medienvorrichtungsstroms (SD), der zum Ansehen auf der Medienvorrichtung bereitgestellt ist;
Kompilieren eines Suchblocks (324) von Medienvorrichtungsfingerabdrücken (222b), die auf die sequentiellen Medienvorrichtungsrahmen (F_{D1-n}) des Medienvorrichtungsstroms (S_{D}) hinweisen, der zum Ansehen auf der Medienvorrichtung bereitgestellt ist, wobei die sequentiellen Medienvorrichtungsrahmen (F_{D1-n}) des Suchblocks (324) einem zweiten Zeitraum des Medienvorrichtungsstroms entsprechen, wobei der zweite Zeitraum kürzer als der erste Zeitraum ist;
Vergleichen (i) des Suchblocks (324) der Medienvorrichtungsfingerabdrücke (222b), die auf die sequentiellen Medienvorrichtungsrahmen (F_{D1-n}) hinweisen, die dem zweiten Zeitraum des Medienvorrichtungsstroms (S_{D}) entsprechen, mit (ii) den Rundfunkfingerabdrücken (222a), die auf die sequentiellen Rundfunkrahmen (F₁₋ₙ) hinweisen, die dem ersten Zeitraum des Rundfunkmedienstroms (S_{B}, S_{C}) entsprechen;
Herstellen, basierend auf dem Vergleichen, einer Anpassungskorrelation (322) zwischen mindestens einem Medienvorrichtungsfingerabdruck (222b) des Suchblocks (324) und mindestens einem der Rundfunkfingerabdrücke (222a), wobei das Herstellen der Anpassungskorrelation (322) auf einem Pearson-Korrelationskoeffizienten basiert, wobei der mindestens eine Medienvorrichtungsfingerabdruck (222b) mindestens einem der Medienvorrichtungsrahmen (F_{D1-n}) entspricht und wobei der mindestens eine Rundfunkfingerabdruck (222a) mindestens einem der Rundfunkrahmen (F₁₋ₙ) entspricht; und
Assoziieren, basierend auf der hergestellten Anpassungskorrelation (322), von Metadaten, die dem mindestens einen Rundfunkfingerabdruck (222a) entsprechen, mit dem mindestens einen Medienvorrichtungsrahmen, wobei die Metadaten eine Rundfunkkanalidentifikation und einen Rahmenort umfassen, wobei die Operationen ferner Folgendes umfassen:
Bestimmen, ob der Suchblock (324) mindestens einen Medienvorrichtungsfingerabdruck (222b) einschließt, der die Anpassungskorrelation (322) zu mehr als einem Rundfunkfingerabdruck (222a) aufweist; und
wenn der Suchblock (324) mindestens einen Medienvorrichtungsfingerabdruck (222b) einschließt, der die Anpassungskorrelation (322) zu mehr als einem Rundfunkfingerabdruck (222a) aufweist:
Bestimmen eines Satzes von Rundfunkfingerabdrücken (222aₛₑₜ), der dem mindestens einen Medienvorrichtungsfingerabdruck (222b) des Suchblocks (324) entspricht, wobei es sich bei jedem Rundfunkfingerabdruck (222a) des Satzes von Rundfunkfingerabdrücken (222aₛₑₜ) um Rundfunkfingerabdrücke sequentiell benachbarter Rundfunkrahmen des Rundfunkmedienstroms (S_{B}, S_{C}) handelt; und
Bestimmen der Anpassungskorrelation (322) als einen Pearson-Korrelationskoeffizienten zwischen dem Suchblock (324) und dem Satz von Rundfunkfingerabdrücken (222aₛₑₜ).

8. System nach Anspruch 7, wobei die Operationen ferner Bestimmen eines Anpassungsmedienvorrichtungsrahmens (F_{MD}) als den Medienvorrichtungsrahmen (F_{D}) umfassen, der dem Medienvorrichtungsfingerabdruck (222b) des mindestens einen Medienvorrichtungsfingerabdrucks (222b) des Suchblocks (324) entspricht, der den größten Pearson-Korrelationskoeffizienten mit einem Anpassungsrundfunkfingerabdruck (222a_{M}) des Satzes von Rundfunkfingerabdrücken (222aₛₑₜ) aufweist.

9. System nach einem der Ansprüche 7-8, wobei jeder Fingerabdruck (222) mindestens einen Pixelwert (Vₚ) des Rahmens (F) des entsprechenden Medienstroms (S) darstellt.

10. System nach einem der Ansprüche 7-9, wobei jeder Fingerabdruck (222) ein durchschnittlicher Pixelwert (Vₚ) ist, der eine Summe eines Graustufenwerts eines entsprechenden Rahmens (F) darstellt.

11. System nach einem der Ansprüche 7-10, wobei jeder Fingerabdruck (222) mehr als einen durchschnittlichen Pixelwert (Vₚ) eines Unterrahmens (F_{sub}) innerhalb eines entsprechenden Rahmens (F) darstellt,
wobei optional jeder Fingerabdruck (222) des entsprechenden Rahmens (F) als ein Sechzehn-Ganzzahl-Vektor dargestellt ist, der jedem durchschnittlichen Pixelwert (Vₚ) von sechzehn Unterrahmen (F_{sub}) entspricht, wobei die sechzehn Unterrahmen (F_{sub}) ein Vier-mal-Vier-Array des entsprechenden Rahmens (F) definieren.

12. System nach einem der Ansprüche 7-11, wobei das Vergleichen des Suchblocks (324) der Medienvorrichtungsfingerabdrücke (222b) mit den Rundfunkfingerabdrücken (222a) Vergleichen des Suchblocks (324) mit einer Datenbankstruktur umfasst, die durch eine Vielzahl von Rundfunkfingerabdrücken definiert ist, wobei die Datenbankstruktur ein binärer Suchbaum ist.

13. Nichttransitorischer Speicher, der Programmanweisungen speichert, die durch einen Prozessor ausführbar sind, um Operationen vorzunehmen, einschließlich:
Empfangen sequentieller Rundfunkrahmen (F1-n) eines Rundfunkmedienstroms (SB, SC), wobei die sequentiellen Rundfunkrahmen (F1-n) einem ersten Zeitraum des Rundfunkmedienstroms (SB, SC) entsprechen;
Generieren von Rundfunkfingerabdrücken (222a), die auf die sequentiellen Rundfunkrahmen (F1-n) des Rundfunkmedienstroms (SB, SC) hinweisen;
Empfangen sequentieller Medienvorrichtungsrahmen (FD1-n) eines Medienvorrichtungsstroms (SD), der zum Ansehen auf der Medienvorrichtung bereitgestellt ist;
Kompilieren eines Suchblocks (324) von Medienvorrichtungsfingerabdrücken (222b), die auf die sequentiellen Medienvorrichtungsrahmen (F_{D1-n}) des Medienvorrichtungsstroms (S_{D}) hinweisen, der zum Ansehen auf der Medienvorrichtung bereitgestellt ist, wobei die sequentiellen Medienvorrichtungsrahmen des Suchblocks (324) einem zweiten Zeitraum des Medienvorrichtungsstroms (S_{D}) entsprechen, wobei der zweite Zeitraum kürzer als der erste Zeitraum ist;
Vergleichen (i) des Suchblocks (324) der Medienvorrichtungsfingerabdrücke (222b), die auf die sequentiellen Medienvorrichtungsrahmen (F_{D1-n}) hinweisen, die dem zweiten Zeitraum des Medienvorrichtungsstroms (S_{D}) entsprechen, mit (ii) den Rundfunkfingerabdrücken (222a), die auf die sequentiellen Rundfunkrahmen (F₁₋ₙ) hinweisen, die dem ersten Zeitraum des Rundfunkmedienstroms (S_{B}, S_{C}) entsprechen;
Herstellen, basierend auf dem Vergleichen, einer Anpassungskorrelation (322) zwischen mindestens einem Medienvorrichtungsfingerabdruck (222b) des Suchblocks (324) und mindestens einem der Rundfunkfingerabdrücke (222a), wobei das Herstellen der Anpassungskorrelation (322) auf einem Pearson-Korrelationskoeffizienten basiert, wobei der mindestens eine Medienvorrichtungsfingerabdruck (222b) mindestens einem der Medienvorrichtungsrahmen (F_{D1-n}) entspricht und wobei der mindestens eine Rundfunkfingerabdruck (222a) mindestens einem der Rundfunkrahmen (F₁₋ₙ) entspricht; und
Assoziieren, basierend auf der hergestellten Anpassungskorrelation (322), von Metadaten, die dem mindestens einen Rundfunkfingerabdruck (222a) entsprechen, mit dem mindestens einen Medienvorrichtungsrahmen, wobei die Metadaten eine Rundfunkkanalidentifikation und einen Rahmenort umfassen, wobei die Operationen ferner Folgendes umfassen:
Bestimmen, ob der Suchblock (324) mindestens einen Medienvorrichtungsfingerabdruck (222b) einschließt, der die Anpassungskorrelation (322) zu mehr als einem Rundfunkfingerabdruck (222a) aufweist; und
wenn der Suchblock (324) mindestens einen Medienvorrichtungsfingerabdruck (222b) einschließt, der die Anpassungskorrelation (322) zu mehr als einem Rundfunkfingerabdruck (222a) aufweist:
Bestimmen eines Satzes von Rundfunkfingerabdrücken (222aₛₑₜ), der dem mindestens einen Medienvorrichtungsfingerabdruck (222b) des Suchblocks (324) entspricht, wobei es sich bei jedem Rundfunkfingerabdruck (222a) des Satzes von Rundfunkfingerabdrücken (222aₛₑₜ) um Rundfunkfingerabdrücke sequentiell benachbarter Rundfunkrahmen des Rundfunkmedienstroms (S_{B}, S_{C}) handelt; und
Bestimmen der Anpassungskorrelation (322) als einen Pearson-Korrelationskoeffizienten zwischen dem Suchblock (324) und dem Satz von Rundfunkfingerabdrücken (222aₛₑₜ).

## Revendications

1. Procédé d'identification d'éléments multimédias prévus pour être visualisés au niveau d'un dispositif multimédia, le procédé comprenant :
la réception, au niveau de matériel de traitement de données (212), de trames de diffusion séquentielles (F₁₋ₙ) d'un flux multimédia de diffusion (S_{B}, S_{C}), les trames de diffusion séquentielles (F₁₋ₙ) correspondant à une première période temporelle du flux multimédia de diffusion (S_{B}, S_{C}) ;
la génération, par le matériel de traitement de données (212), d'empreintes de diffusion (222a) indiquant les trames de diffusion séquentielles (F₁₋ₙ) du flux multimédia de diffusion (S_{B}, S_{C}) ;
la réception, par le matériel de traitement de données (212), de trames de dispositif multimédia séquentielles (FD1-n) d'un flux de dispositif multimédia (SD) prévues pour être visualisées au niveau du dispositif multimédia ;
la compilation, par le matériel de traitement de données (212), d'un bloc de recherche (324) d'empreintes de dispositif multimédia (222b) indiquant les trames de dispositif multimédia séquentielles (F_{D1-n}) du flux de dispositif multimédia (S_{D}) prévues pour être visualisées au niveau du dispositif multimédia, les trames de dispositif multimédia séquentielles (F_{D1-n}) du bloc de recherche (324) correspondant à une seconde période temporelle du flux de dispositif multimédia, la seconde période temporelle étant plus courte que la première période temporelle ;
la comparaison, par le matériel de traitement de données (212), (i) du bloc de recherche (324) des empreintes de dispositif multimédia (222b) indiquant les trames de dispositif multimédia séquentielles (F_{D1-n}) correspondant à la seconde période temporelle du flux de dispositif multimédia (S_{D}) avec
(ii) les empreintes de diffusion (222a) indiquant les trames de diffusion séquentielles (F₁₋ₙ) correspondant à la première période temporelle du flux multimédia de diffusion (S_{B}, S_{C}) ;
l'établissement, par le matériel de traitement de données (212), sur la base de la comparaison, d'une corrélation de correspondance (322) entre au moins une empreinte de dispositif multimédia (222b) du bloc de recherche (324) et au moins une des empreintes de diffusion (222a), dans lequel l'établissement de la corrélation de correspondance (322) est basé sur un coefficient de corrélation de Pearson, dans lequel l'au moins une empreinte de dispositif multimédia (222b) correspond à au moins l'une des trames de dispositif multimédia (F_{D1-n}), et dans lequel l'au moins une empreinte de diffusion (222a) correspond à au moins l'une des trames de diffusion (F₁₋ₙ) ; et
l'association, par le matériel de traitement de données (212), sur la base de la corrélation de correspondance établie (322),
de métadonnées correspondant à l'au moins une empreinte de diffusion (222a) avec l'au moins une trame de dispositif multimédia, les métadonnées comprenant une identification de canal de diffusion et un emplacement de trame, le procédé comprenant en outre :
le fait de déterminer, par le matériel de traitement de données (212), si le bloc de recherche (324) comprend au moins une empreinte de dispositif multimédia (222b) présentant la corrélation de correspondance (322) avec plus d'une empreinte de diffusion (222a) ; et
lorsque le bloc de recherche (324) comprend au moins une empreinte de dispositif multimédia (222b) présentant la corrélation de correspondance (322) avec plus d'une empreinte de diffusion (222a) :
la détermination, par le matériel de traitement de données (212), d'un ensemble d'empreintes de diffusion (222aₛₑₜ) correspondant à l'au moins une empreinte de dispositif multimédia (222b) du bloc de recherche (324), chaque empreinte de diffusion (222a) de l'ensemble d'empreintes de diffusion (222aₛₑₜ) étant des empreintes de diffusion de trames de diffusion séquentiellement adjacentes du flux multimédia de diffusion (S_{B}, S_{C}) ; et
la détermination, par le matériel de traitement de données (212), de la corrélation de correspondance (322) en tant que coefficient de corrélation de Pearson entre le bloc de recherche (324) et l'ensemble d'empreintes de diffusion (222aₛₑₜ).

2. Procédé de la revendication 1, comprenant en outre la détermination, par le matériel de traitement de données (212), d'une trame de dispositif multimédia de correspondance (F_{MD}) en tant que trame de dispositif multimédia (F_{D}) correspondant à l'empreinte de dispositif multimédia (222b) de l'au moins une empreinte de dispositif multimédia (222b) du bloc de recherche (324) présentant le plus grand coefficient de corrélation de Pearson avec une empreinte de diffusion de correspondance (222a_{M}) de l'ensemble d'empreintes de diffusion (222aₛₑₜ).

3. Procédé de l'une quelconque des revendications 1 à 2, dans lequel chaque empreinte (222) représente au moins une valeur de pixel (Vₚ) de la trame (F) du flux multimédia (S) correspondant.

4. Procédé de l'une quelconque des revendications 1 à 3, dans lequel chaque empreinte (222) est une valeur de pixel moyenne (Vₚ) représentant une somme d'une valeur d'échelle de gris d'une trame correspondante (F).

5. Procédé de l'une quelconque des revendications 1 à 4, dans lequel chaque empreinte (222) représente plus d'une valeur de pixel moyenne (Vₚ) d'une sous-trame (F_{sub}) dans une trame correspondante (F), éventuellement dans lequel chaque empreinte (222) de la trame correspondante (F) est représentée comme un vecteur de seize entiers correspondant à chaque valeur de pixel moyenne (Vₚ) de seize sous-trames (F_{sub}), les seize sous-trames (F_{sub}) définissant un réseau de quatre par quatre de la trame correspondante (F).

6. Procédé de l'une quelconque des revendications 1 à 5, dans lequel la comparaison du bloc de recherche (324) des empreintes de dispositif multimédia (222b) avec les empreintes de diffusion (222a) comprend la comparaison du bloc de recherche (324) à une structure de base de données définie par une pluralité d'empreintes de diffusion, dans lequel la structure de base de données est un arbre de recherche binaire.

7. Système comprenant :
du matériel de traitement de données (212) ; et
du matériel de mémoire (214) en communication avec le matériel de traitement de données (212), le matériel de mémoire (214) stockant des instructions qui, lorsqu'elles sont exécutées sur le matériel de traitement de données (212), amènent le matériel de traitement de données (212) à réaliser des opérations comprenant :
la réception de trames de diffusion séquentielles (F1-n) d'un flux multimédia de diffusion (SB, SC), les trames de diffusion séquentielles (F1-n) correspondant à une première période temporelle du flux multimédia de diffusion (SB, SC) ;
la génération d'empreintes de diffusion (222a) indiquant les trames de diffusion séquentielles (F1-n) du flux multimédia de diffusion (SB, SC) ;
la réception de trames de dispositif multimédia séquentielles (FD1-n) d'un flux de dispositif multimédia (SD) prévues pour être visualisées au niveau du dispositif multimédia ;
la compilation d'un bloc de recherche (324) d'empreintes de dispositif multimédia (222b) indiquant les trames de dispositif multimédia séquentielles (F_{D1-n}) du flux de dispositif multimédia (S_{D}) prévues pour être visualisées au niveau du dispositif multimédia, les trames de dispositif multimédia séquentielles (F_{D1-n}) du bloc de recherche (324) correspondant à une seconde période temporelle du flux de dispositif multimédia, la seconde période temporelle étant plus courte que la première période temporelle ;
la comparaison (i) du bloc de recherche (324) des empreintes de dispositif multimédia (222b) indiquant les trames de dispositif multimédia séquentielles (F_{D1-n}) correspondant à la seconde période temporelle du flux de dispositif multimédia (S_{D}) avec (ii) les empreintes de diffusion (222a) indiquant les trames de diffusion séquentielles (F₁₋ₙ) correspondant à la première période temporelle du flux multimédia de diffusion (S_{B}, S_{C}) ;
l'établissement, sur la base de la comparaison, d'une corrélation de correspondance (322) entre au moins une empreinte de dispositif multimédia (222b) du bloc de recherche (324) et au moins une des empreintes de diffusion (222a), dans lequel l'établissement de la corrélation de correspondance (322) est basé sur un coefficient de corrélation de Pearson, dans lequel l'au moins une empreinte de dispositif multimédia (222b) correspond à au moins l'une des trames de dispositif multimédia (F_{D1-n}), et dans lequel l'au moins une empreinte de diffusion (222a) correspond à au moins l'une des trames de diffusion (F₁₋ₙ) ; et
l'association, sur la base de la corrélation de correspondance établie (322), de métadonnées correspondant à l'au moins une empreinte de diffusion (222a) avec l'au moins une trame de dispositif multimédia, les métadonnées comprenant une identification de canal de diffusion et un emplacement de trame, dans lequel les opérations comprennent en outre :
le fait de déterminer si le bloc de recherche (324) comprend au moins une empreinte de dispositif multimédia (222b) présentant la corrélation de correspondance (322) avec plus d'une empreinte de diffusion (222a) ; et
lorsque le bloc de recherche (324) comprend au moins une empreinte de dispositif multimédia (222b) présentant la corrélation de correspondance (322) avec plus d'une empreinte de diffusion (222a) :
la détermination d'un ensemble d'empreintes de diffusion (222aₛₑₜ) correspondant à l'au moins une empreinte de dispositif multimédia (222b) du bloc de recherche (324), chaque empreinte de diffusion (222a) de l'ensemble d'empreintes de diffusion (222aₛₑₜ) étant des empreintes de diffusion de trames de diffusion séquentiellement adjacentes du flux multimédia de diffusion (S_{B}, S_{C}) ; et
la détermination de la corrélation de correspondance (322) en tant que coefficient de corrélation de Pearson entre le bloc de recherche (324) et l'ensemble d'empreintes de diffusion (222aₛₑₜ).

8. Système de la revendication 7, dans lequel les opérations comprennent en outre la détermination d'une trame de dispositif multimédia de correspondance (F_{MD}) en tant que trame de dispositif multimédia (F_{D}) correspondant à l'empreinte de dispositif multimédia (222b) de l'au moins une empreinte de dispositif multimédia (222b) du bloc de recherche (324) présentant le plus grand coefficient de corrélation de Pearson avec une empreinte de diffusion de correspondance (222a_{M}) de l'ensemble d'empreintes de diffusion (222aₛₑₜ).

9. Système de l'une quelconque des revendications 7 à 8, dans lequel chaque empreinte (222) représente au moins une valeur de pixel (Vₚ) de la trame (F) du flux multimédia (S) correspondant.

10. Système de l'une quelconque des revendications 7 à 9, dans lequel chaque empreinte (222) est une valeur de pixel moyenne (Vₚ) représentant une somme d'une valeur d'échelle de gris d'une trame correspondante (F).

11. Système de l'une quelconque des revendications 7 à 10, dans lequel chaque empreinte (222) représente plus d'une valeur de pixel moyenne (Vₚ) d'une sous-trame (F_{sub}) dans une trame correspondante (F), éventuellement dans lequel chaque empreinte (222) de la trame correspondante (F) est représentée comme un vecteur de seize entiers correspondant à chaque valeur de pixel moyenne (Vₚ) de seize sous-trames (F_{sub}), les seize sous-trames (F_{sub}) définissant un réseau de quatre par quatre de la trame correspondante (F).

12. Système de l'une quelconque des revendications 7 à 11, dans lequel la comparaison du bloc de recherche (324) des empreintes de dispositif multimédia (222b) avec les empreintes de diffusion (222a) comprend la comparaison du bloc de recherche (324) à une structure de base de données définie par une pluralité d'empreintes de diffusion, dans lequel la structure de base de données est un arbre de recherche binaire.

13. Mémoire non transitoire stockant des instructions de programme exécutables par un processeur pour effectuer des opérations comprenant :
la réception de trames de diffusion séquentielles (F1-n) d'un flux multimédia de diffusion (SB, SC), les trames de diffusion séquentielles (F1-n) correspondant à une première période temporelle du flux multimédia de diffusion (SB, SC) ;
la génération d'empreintes de diffusion (222a) indiquant les trames de diffusion séquentielles (F1-n) du flux multimédia de diffusion (SB, SC) ;
la réception de trames de dispositif multimédia séquentielles (FD1-n) d'un flux de dispositif multimédia (SD) prévues pour être visualisées au niveau du dispositif multimédia ;
la compilation d'un bloc de recherche (324) d'empreintes de dispositif multimédia (222b) indiquant les trames de dispositif multimédia séquentielles (F_{D1-n}) du flux de dispositif multimédia (S_{D}) prévues pour être visualisées au niveau du dispositif multimédia, les trames de dispositif multimédia séquentielles du bloc de recherche (324) correspondant à une seconde période temporelle du flux de dispositif multimédia (S_{D}), la seconde période temporelle étant plus courte que la première période temporelle ;
la comparaison (i) du bloc de recherche (324) des empreintes de dispositif multimédia (222b) indiquant les trames de dispositif multimédia séquentielles (F_{D1-n}) correspondant à la seconde période temporelle du flux de dispositif multimédia (S_{D}) avec (ii) les empreintes de diffusion (222a) indiquant les trames de diffusion séquentielles (F₁₋ₙ) correspondant à la première période temporelle du flux multimédia de diffusion (S_{B}, S_{C}) ;
l'établissement, sur la base de la comparaison, d'une corrélation de correspondance (322) entre au moins une empreinte de dispositif multimédia (222b) du bloc de recherche (324) et au moins une des empreintes de diffusion (222a), dans lequel l'établissement de la corrélation de correspondance (322) est basé sur un coefficient de corrélation de Pearson, dans lequel l'au moins une empreinte de dispositif multimédia (222b) correspond à au moins l'une des trames de dispositif multimédia (F_{D1-n}), et dans lequel l'au moins une empreinte de diffusion (222a) correspond à au moins l'une des trames de diffusion (F₁₋ₙ) ; et
l'association, sur la base de la corrélation de correspondance établie (322), de métadonnées correspondant à l'au moins une empreinte de diffusion (222a) avec l'au moins une trame de dispositif multimédia, les métadonnées comprenant une identification de canal de diffusion et un emplacement de trame, dans lequel les opérations comprennent en outre :
le fait de déterminer si le bloc de recherche (324) comprend au moins une empreinte de dispositif multimédia (222b) présentant la corrélation de correspondance (322) avec plus d'une empreinte de diffusion (222a) ; et
lorsque le bloc de recherche (324) comprend au moins une empreinte de dispositif multimédia (222b) présentant la corrélation de correspondance (322) avec plus d'une empreinte de diffusion (222a) :
la détermination d'un ensemble d'empreintes de diffusion (222aₛₑₜ) correspondant à l'au moins une empreinte de dispositif multimédia (222b) du bloc de recherche (324), chaque empreinte de diffusion (222a) de l'ensemble d'empreintes de diffusion (222aₛₑₜ) étant des empreintes de diffusion de trames de diffusion séquentiellement adjacentes du flux multimédia de diffusion (S_{B}, S_{C}) ; et
la détermination de la corrélation de correspondance (322) en tant que coefficient de corrélation de Pearson entre le bloc de recherche (324) et l'ensemble d'empreintes de diffusion (222aₛₑₜ).
